# EUROPEAN PATENT SPECIFICATION

(11) **EP 1 309 440 B1**
(45) Date of publication and mention of the grant of the patent: **15.03.2006**
(21) Application number: 01962518.5
(22) Date of filing: 20.08.2001
(51) Int. Cl.: B29C 51/00

(54) **EXTERIOR VACUUM MOLDED BODY PANELS**
VAKUUMUMGEFORMTE KRAFTFAHRZEUGTEILE
ELEMENTS DE CARROSSERIE EXTERIEURE MOULES SOUS VIDE

(30) Priority: 18.08.2000 US 226094 P
(43) Date of publication of application: 14.05.2003
(73) Proprietor: MAGNA INTERNATIONAL INC, Aurora, Ontario L4G 7K1 (CA)
(72) Inventor: JAEKEL, Federico, G., Aurora, Ontario L4G 6X2 (CA)
(74) Representative: Hössle Kudlek & Partner
(86) International application number: PCT/CA2001/001180
(87) International publication number: WO 2002/016114

(56) References cited:
- EP-A- 0 285 071
- WO-A-00/51829
- DE-A- 4 425 342
- US-A- 5 298 319
- US-A- 5 840 149
- US-A- 5 968 657

## Description

### BACKGROUND OF THE INVENTION

### Field of the Invention

The present invention relates to vehicular body parts and more specifically, to exterior vacuum molded body panels.

### Description of Prior Art

Automotive body panels can be broken down generally into two distinct categories, interior and exterior. Traditionally, interior body panels have been made from plastic materials. For example, U.S. Patent No. 3,867,240 to Doerfling (hereafter the '240 patent) discloses a laminar panel for use in interior trim. The panel of the '240 patent is a contoured thermoplastic resin foam core with a cover sheet and a decorative surface coating covered with an exterior film. The use of plastic for interior body panels is beneficial in that they add to the comfort and feel of the vehicle interior. For example, a textured finish can be provided, such as disclosed in the '240 patent.

Exterior body panels, on the other hand, have traditionally been made from sheet metal. More recently, however, exterior plastic body panels have been introduced in automotive design because of their functional attributes, such as resistance to corrosion, relatively low expense, relatively low weight and resistance to denting. The possible aesthetic advantages of plastic, however, have not heretofore been contemplated with respect to exterior body panels.

WO-A-00/51829 and EP-A-285071 disclose a method according to the preamble of claims 1 and 5 and an exterior body panel according to the preamble of claim 9, respectively.

### SUMMARY OF THE INVENTION

The present invention provides a strong, cost-effective, decorative exterior body panel for use on automotive vehicles. Layers of thermoplastic material are sandwiched to produce a laminate. The laminate is then heated and vacuum formed into a selected body panel shape. To further ease the process of production of the vehicle body, and to provide an aesthetically pleasing appearance, the panel has an integral decorative material. Such a panel does not require paint or other extra steps to provide a finished look to the vehicle body. Thus, once the body panels are produced, they may simply be fastened to a vehicle frame without further processing.

The invention is particularly useful when the exterior panels disclosed are used in conjunction with a vehicular space frame as disclosed and claimed in Hydroformed Space Frame and Method of Manufacturing the Same, U.S. Patent No. 6,092,865 and International Application No. WO 99/20516.

### DESCRIPTION OF THE DRAWINGS

FIG. 1 shows a schematic diagram of a process of making sandwiched, vacuum molded laminates using liquid or powdered plastic material for the top and bottom layers;
FIG. 2 shows a schematic diagram of a process of making sandwiched, vacuum molded laminates using sheets of plastic material for the top and bottom layers;
FIG. 3 shows a side view of a sandwiched, three-layered laminate body panel;
FIG. 4 is a perspective view of a portion of a space frame for a sports utility-type vehicle showing a single body panel in the form of a rear quarter panel constructed according to the teachings of the present invention mounted on one side of the space frame; and
FIG. 5 shows a partial side elevational view of the rear quarter panel mounted on the space frame, portion of which are indicated by dashed lines.

### DETAILED DESCRIPTION OF THE PREFERRED EMBODIMENTS

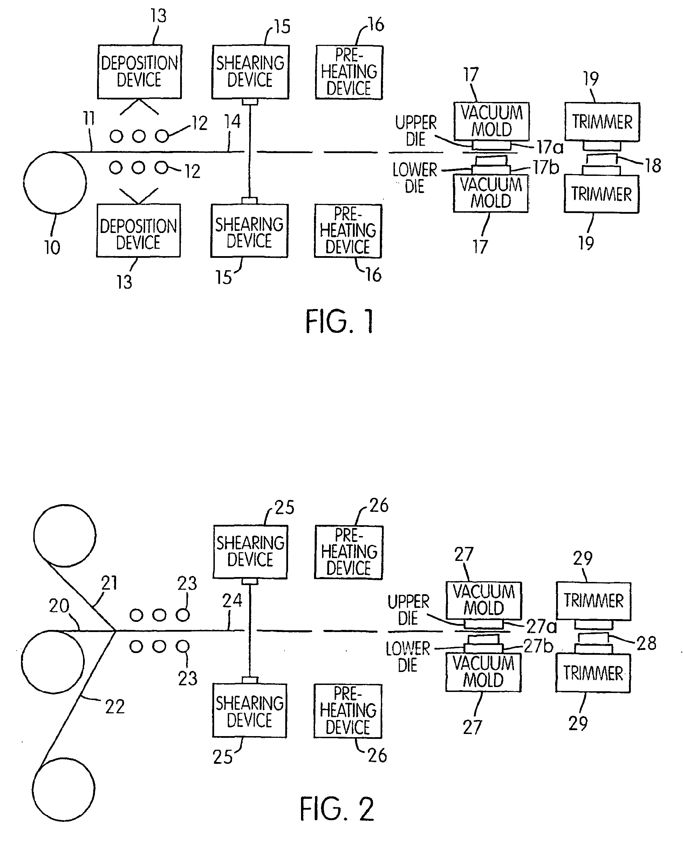

Referring to FIG. 1, a coiled role of decorative material 10 is uncoiled so that a sheet of decorative material 11 passes between an array of rollers 12 and a pair of deposition devices 13. The decorative material may include any of several types of materials. For example, cloth, denim, Lycra or other fabrics may be used. The decorative material may be colored, textured, reflective, or any combination thereof. Fiberglass material may be used, and reinforcement material such as metal or plastic screening may also be used. In addition, the decorative material may have plural (two or more) colors formed thereon, thus creating an aesthetically pleasing pattern. In one contemplated embodiment, the decorative material is a fabric having two or more colors formed thereon. The colors may form a pattern, such as plaid or paisley, for example. If not flexible at room temperature, the decorative material should be flexible at the temperature to which the plastic layers are heated.

Each side of the sheet of decorative material 11 is sprayed with a mixture of liquid or powdered epoxy and plastic by the array of rollers 12 and deposition devices 13, forming a sandwiched, layered plastic material 14. A shearing device 15 cuts the sandwiched, layered plastic material into sheets approximately the size of a finished body panel. The sheets pass through a pre-heating device 16, which may be an open or closed oven, for example, or a pair of heated, opposed platens. The pre-heated, sandwiched, layered plastic sheets enter a vacuum mold 17 and are pressed between an upper die 17a and a lower die 17b. The dies 17a and 17b are then closed, causing each sheet to conform to the mold. The mold draws a vacuum, causing the sheet to conform more closely to the mold and forming molded sheet 18. The molded sheet 18 is removed from the mold and is trimmed by trimmer 19. The molded sheet 18 is then cooled so as to become hard and resilient, and is thereby suitable for use as an exterior body panel.

Referring to FIG. 2, a second method is shown for producing the body panels of the present invention. Rather than using a pair of spray deposition devices 13, the top and bottom layers are in sheet form to begin with. A clear, top layer of epoxy/plastic sheeting 21 and a bottom layer of epoxy/plastic sheeting 22 are sandwiched around a sheet of decorative material 20. After passing through an array of rollers 23, the three sheets together form a sandwiched, layered plastic material 24.

The remaining parts of the second method are similar to that of the first method. That is, a shearing device 25 cuts the sandwiched, layered plastic material into sheets approximately the size of the finished body panel. The sheets pass through a pre-heating device 26, which may be an open or closed oven, for example, or a pair of heated, opposed platens. The pre-heated, sandwiched, layered plastic sheets enter a vacuum mold 27 and are pressed between an upper die 27a and a lower die 27b. The dies 27a and 27b are then closed, causing each sheet to conform to the mold. The mold draws a vacuum, causing the sheet to conform more closely to the mold and forming molded sheet 28. The molded sheet 28 is removed from the mold and is trimmed by trimmer 29. The molded sheet 28 is then cooled so as to become hard and resilient, and is thereby suitable for use as an exterior body panel.

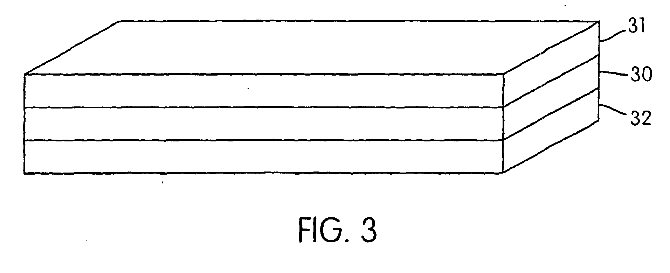

Referring now to FIG. 3, a section of the molded sheet is shown. In particular, the molded sheet includes a layer of decorative material 30 (e.g., formed by decorative material 11 in the first embodiment or by decorative material 20 in the second embodiment) sandwiched between a plastic inner layer 31 that is to face the vehicle frame, and an outer layer 32 that faces away from the vehicle frame. The plastic outer layer 32 should be substantially transparent to reveal the texture and color of the decorative material 30. The inner layer 31 and outer layer 32 can be formed by the spray method illustrated in FIG. 1 or the sheeting method illustrated in FIG. 2.

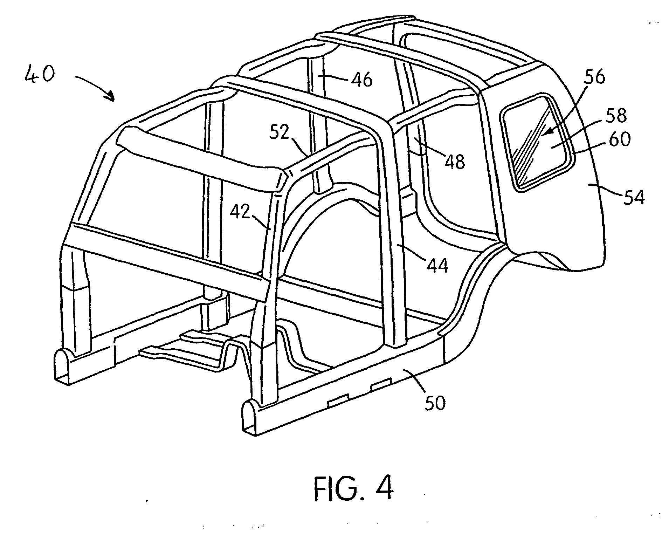

FIG. 4 shows a portion of a hydroformed space frame generally designated 40 for constructing a sports utility-type motor vehicle. The construction of the space frame 40, including the manner in which the individual hydroformed members are formed and the manner in which the individual hydroformed members are interconnected to form the space frame 40, is disclosed and described in detail in the U.S. Patent No. 6,092,865 and International Application No. WO 99/20516 and is not considered in depth in the present application. The interconnected hydroformed members provide an A pillar 42, a B pillar 44, a C pillar 46 and a D pillar 48 on each side of the space frame 40. Each pillar 42, 44, 46, 48 is connected at one end to a hydroformed lower side rail 50. A roof rail 52 extends integrally rearwardly from the A pillar 42 and is connected to upper end portions of the B, C and D pillars 44, 46, 48.

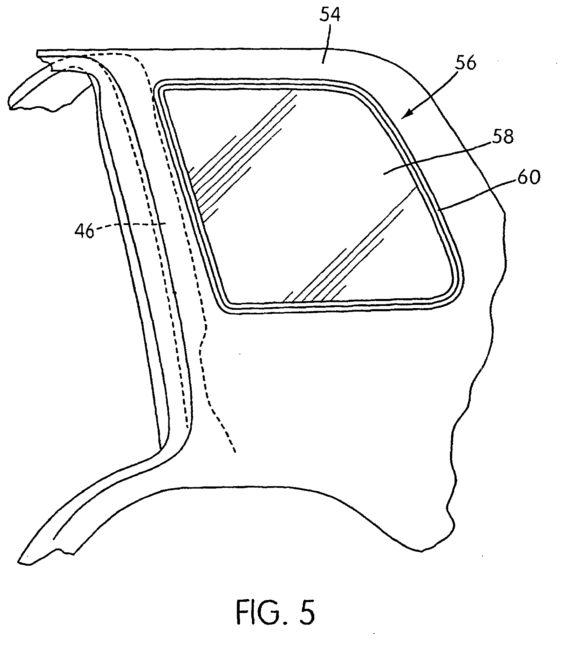

Suitably shaped exterior vehicle body panels constructed according to the principles of present invention can be advantageously mounted on the hydroformed space frame 40 of this type during vehicle assembly to form the exterior of the sports utility vehicle. FIGS. 4 and 5 illustrate the manner in which a single exemplary molded plastic sheet 54 in the form of a rear quarter panel is mounted on the space frame 40. Preferably, the rear quarter panel 54 would be fixed to adjacent portions of the space frame 40, including the C pillar 46, the D pillar 48, a rearward portion of the side rail member 50 and the rearward portion of the longitudinally extending roof rail 52, by a structural adhesive. A central opening 56 is formed in the quarter panel 54 to accommodate installation of a transparent panel 58 constructed of polycarbonate such as Plexiglas® or the like to provide a rear side widow. A rubber-like continuous seal 60 disposed around the perimeter of the opening 56 insulates and helps support the transparent panel 58.

It can be understood that the views of FIG. 4 and 5 showing a single body panel 54 mounted on the frame 40 are intended to illustrate a use of a plastic panel constructed according to the teachings of the invention only and are not intended to imply any limitations or preferences on the order in which vehicle components are assembled to one another during vehicle manufacture.

While it will be apparent to one of ordinary skill in the art that the descriptions of the preferred embodiments are meant to achieve the advantages and benefits of the present invention, it will be appreciated that the invention is susceptible to modification and variation without departing from the scope thereof as defined in the following claims.

## Claims

1. A method of producing a vacuum formed exterior body panel (30-32) for use on automotive vehicles, comprising:
providing a decorative layer (30),
forming a laminate by providing a thermoplastic material on at least one side of the decorative layer,
heating the laminate,
conforming the laminate into a desired shape by pressing the laminate in a vacuum mold, and
cooling the laminate, **characterized in that**
the step of forming the laminate includes providing the thermoplastic material on an outer side (32) and on an inner side (31) of the decorative layer, at least one of the thermoplastic materials provided on the outer side (32) and inner side (31) being substantially transparent.

2. The method as set forth in claim 1, wherein the decorative layer (30) is flexible.

3. The method as set forth in claim 1, wherein the vacuum molding die machine comprises an upper die (17a) and a lower die (17b).

4. The method as set forth in claim 3, wherein a vacuum conforms the laminate to one of the upper die (17a) and the lower die (17b).

5. A method of making vacuum formed exterior body panels, comprising:
providing a layer of decorative material (30),
depositing a plastic layer (31, 32) on at least one side of the decorative material (30),
heating the decorative material (30) and the plastic layers (31, 32),
pressing the decorative material, the top plastic layer (32) and the bottom plastic layer (31) in a vacuum mold to form a laminate, and
cooling the pressed laminate, **characterized in that**
the step of depositing the plastic layer includes depositing one side of the decorative material (30) a mixture of epoxy and plastic which when cured forms a plastic layer (32) that is substantially transparent, and
depositing on an opposite side of the decorative materials a mixture of epoxy and plastic which when cured forms a plastic layer (31).

6. The method as set forth in claim 5, wherein the layer of decorative material (30) is flexible.

7. The method as set forth in claim 5, wherein the vacuum mold (17) comprises an upper die (17a) and a lower die (17b).

8. The method as set forth in claim 5, further comprising removing air from the vacuum mold (17) in forming the molded laminate.

9. An exterior body panel for use on automotive vehicles, comprising:
a substantially transparent outer layer (32),
an inner layer (31), and
a decorative layer (30) sandwiched between the outer layer (32) and the inner layer (31), **characterized in that**
said outer layer (32) is formed by depositing on one side of the decorative material (30) a mixture of epoxy and plastic which when cured forms a plastic layer that is substantially transparent, and **in that**
the inner layer is formed by depositing on an opposite side of the decorative material (30) a mixture of epoxy and plastic which when cured forms a plastic layer (31).

10. The exterior body panel of claim 9, wherein the decorative material (30) is flexible.

11. The exterior body panel of claim 10, wherein said decorative layer (30) is selected from a group including fabric, wire mesh, plastic screening, colored plastic and fiberglass.

## Patentansprüche

1. Verfahren zum Herstellen einer vakuumgeformten Karosserieaußenverkleidung (30-32) zur Verwendung bei Automobilkraftfahrzeugen, mit den folgenden Schritten:
Bereitstellen einer Dekorschicht (30),
Ausbilden eines Laminats durch Bereitstellen eines thermoplastischen Materials auf zumindest einer Seite der Dekorschicht,
Erwärmen des Laminats,
Anpassen des Laminats an eine gewünschte Form durch Drücken des Laminats in eine Vakuumform, und
Abkühlen des Laminats, **dadurch gekennzeichnet, dass**
der Schritt des Ausbildens des Laminats das Bereitstellen des thermoplastischen Materials an einer Außenseite (32) und an einer Innenseite (31) der Dekorschicht umfasst, wobei mindestens eine der thermoplastischen Materialien, die auf der Außenseite (32) und der Innenseite (31) bereitgestellt sind, im wesentlichen transparent ist.

2. Verfahren nach Anspruch 1, bei dem die Dekorschicht (30) flexibel ist.

3. Verfahren nach Anspruch 1, bei dem die Vakuumformpressmaschine eine obere Presse (17a) und eine untere Presse (17b) umfasst.

4. Verfahren nach Anspruch 3, bei dem ein Vakuum das Laminat entweder an die obere Presse (17a) oder die untere Presse (17b) anpasst.

5. Verfahren zum Erzeugen vakuumgeformter Karosserieaußenverkleidungen mit den folgenden Schritten:
Bereitstellen einer Schicht aus Dekormaterial (30),
Aufbringen einer Kunststoffschicht (31, 32) auf mindestens einer Seite des Dekormaterials (30),
Erwärmen des Dekormaterials (30) und der Kunststoffschichten (31, 32),
Pressen des Dekormaterials, der oberen Kunststoffschicht (32) und der unteren Kunststoffschicht (31) in eine Vakuumform, um ein Laminat auszubilden, und
Abkühlen des gepressten Laminats, **dadurch gekennzeichnet, dass**
der Schritt des Aufbringens der Kunststoffschicht das Aufbringen einer Mischung von Expoxid und Kunststoff auf einer Seite des Dekormaterials (30) umfasst, die, wenn sie ausgehärtet ist, eine Kunststoffschicht (32) ausbildet, die im wesentlichen transparent ist, und
Aufbringen einer Mischung von Epoxid und Kunststoff auf einer entgegengesetzten Seite des Dekormaterials, die, wenn sie ausgehärtet ist, eine Kunststoffschicht (31) ausbildet.

6. Verfahren nach Anspruch 5, bei dem die Schicht aus Dekormaterial (30) flexibel ist.

7. Verfahren nach Anspruch 5, bei dem die Vakuumform (17) eine obere Presse (17a) und eine untere Presse (17b) umfasst.

8. Verfahren nach Anspruch 5, das des weiteren den Schritt des Entfernens von Luft aus der Vakuumform (17) beim Ausbilden des geformten Laminats umfasst.

9. Karosserieaußenverkleidung zur Verwendung bei Automobilkraftfahrzeugen, mit:
einer im wesentlichen transparenten Außenschicht (32),
einer Innenschicht (31), und
einer Dekorschicht (30), die zwischen die Außenschicht (32) und die Innenschicht (31) gelegt ist, **dadurch gekennzeichnet, dass**
die Außenschicht (32) durch Aufbringen einer Mischung aus Epoxid und Kunststoff auf einer Seite des Dekormaterials (30) ausgebildet ist, die, wenn sie ausgehärtet ist, eine Kunststoffschicht ausbildet, die im wesentlichen transparent ist, und **dadurch**, dass
die Innenschicht durch Aufbringen einer Mischung aus Epoxid und Kunststoff auf einer entgegengesetzten Seite des Dekormaterials (30) ausgebildet ist, die, wenn sie ausgehärtet ist, eine Kunststoffschicht (31) ausbildet.

10. Karosserieaußenverkleidung nach Anspruch 9, bei der das Dekormaterial (30) flexibel ist.

11. Karosserieaußenverkleidung nach Anspruch 10, bei der die Dekorschicht (30) aus einer Gruppe bestehend aus Gewebe, Drahtgitter, Kunststoffsieb, buntem Kunststoff und Fiberglas ausgewählt ist.

## Revendications

1. Procédé pour produire un panneau de carrosserie (30-32) formé sous vide destiné à être utilisé sur des véhicules automobiles, comprenant:
la fourniture d'une couche décorative (30),
la formation d'un stratifié en fournissant une matière thermoplastique sur au moins un côté de la couche décorative,
le chauffage du stratifié,
la conformation du stratifié sous une forme désirée en pressant le stratifié dans un moule sous vide, et
le refroidissement du stratifié, **caractérisé ce que**
l'étape de formation du stratifié inclut de fournir la matière thermoplastique sur un côté extérieur (32) et sur un côté intérieur (31) de la couche décorative, l'une au moins des matières thermoplastiques fournies sur le côté extérieur (32) et sur le côté intérieur (31) étant sensiblement transparente.

2. Procédé selon la revendication 1, dans lequel la couche décorative (30) est flexible.

3. Procédé selon la revendication 1, dans lequel la machine de moulage sous vide comprend une matrice supérieure (17a) et une matrice inférieure (17b).

4. Procédé selon la revendication 3, dans lequel un vide amène le stratifié à se conformer soit à la matrice supérieure (17a) soit à la matrice inférieure (17b).

5. Procédé pour réaliser des panneaux de carrosserie extérieure formés sous vide, comprenant:
la fourniture d'une couche de matière décorative (30),
la déposition d'une couche de matière plastique (31, 32) sur au moins un côté de la matière décorative (30),
le chauffage de la matière décorative (30) et des couches de matière plastique (31, 32),
le pressage de la matière décorative, de la couche de matière plastique supérieure (31) et de la couche de matière plastique inférieure (31) dans un moule sous vide pour former un stratifié, et
le refroidissement du stratifié pressé, **caractérisé en ce que**
l'étape de déposition de la couche de matière plastique inclut de déposer sur un côté de la matière décorative (30) un mélange d'époxy et de matière plastique qui forme, lorsqu'il est durci, une couche de matière plastique (32) qui est sensiblement transparente, et
de déposer sur un côté opposé de la matière décorative, un mélange d'époxy et de matière plastique qui forme, lorsqu'il est durci, une couche de matière plastique (31).

6. Procédé selon la revendication 5, dans lequel la couche de matière décorative (30) est flexible.

7. Procédé selon la revendication 5, dans lequel le moule sous vide (17) comprend une matrice supérieure (17a) et une matrice inférieure (17b).

8. Procédé selon la revendication 5, comprenant en outre la suppression de l'air hors du moule sous vide (17) lors de la formation du stratifié moulé.

9. Panneau de carrosserie extérieure destiné à être utilisé sur des véhicules automobiles, comprenant:
une couche extérieure (32) sensiblement transparente,
une couche intérieure (31), et
une couche décorative (30) prise en sandwich entre la couche extérieure (32) et la couche intérieure (31), **caractérisé en ce que**
ladite couche extérieure (32) est formée en déposant sur un côté du matériau décoratif (30) un mélange d'époxy et de matière plastique qui forme, lorsqu'il est durci, une couche de matière plastique qui est sensiblement transparente, et **en ce que**
la couche intérieure est formée en déposant sur un côté opposé de la matière décorative (30) un mélange d'époxy et de matière plastique qui forme, lorsqu'il est durci, une couche de matière plastique (31).

10. Panneau de carrosserie extérieure selon la revendication 9, dans lequel la matière décorative (30) est flexible.

11. Panneau de carrosserie extérieure selon la revendication 10, dans lequel ladite couche décorative (30) est choisie parmi un groupe qui inclut tissus, grillages en fils, cribles en matière plastique, matières plastiques colorées et fibres de verre.
